# EUROPEAN PATENT APPLICATION

(11) **EP 1 118 777 A2**
(43) Date of publication of application: **25.07.2001**
(21) Application number: 01300420.5
(22) Date of filing: 18.01.2001
(51) Int. Cl.: F16B 25/00, B23P 19/06

(54) **Heat-assisted method of installing screws**

(30) Priority: 18.01.2000 US 176683; 18.10.2000 US 691566
(71) Applicant: EMHART INC., Newark, Delaware 19711 (US)
(72) Inventor: Piacenti, Frank, Cambellsville, Kentucky 42718 (US); Greenwood, Peter J., Cheshire, Connecticut 06410 (US); Lafond, John A, Rowayton, Connecticut 06853 (US); Gustafson, Paul A, Hamden Connecticut 06517-3532 (US)
(74) Representative: Bell, Ian Stephen

(57) **Abstract**

A method for installing threaded fasteners to a workpiece having a joint formed by a plurality of joint members is provided. The method includes the steps of heating the joint in an area to be fastened, pushing the fastener into the joint to form a hole in at least one of the joint members, and rotating the fastener in the hole to form threads in the joint and to threadably engage the fastener to the workpiece. A tool for performing the method is also provided.

## Description

The present invention relates generally to a method for thread forming and more particularly to a heat-assisted method for forming threads during the installation of a screw.

Threaded fasteners are employed in many applications to achieve a strong joint which may be readily disassembled. One factor which determines the strength of the joint is related to the number of threads of engagement between the fastener and the joint member. In sheet metal applications where self-taping fasteners are employed to secure the joint, the number of threads of engagement is usually limited by the sheet metal thickness. In such applications, the threaded fastener is generally stronger than the threads formed in the joint member due to the relatively low number of engaged threads. Consequently, it is common to strip the threads in the joint member, even at relatively low installation torques. Compounding this problem is the general trend to reduce weight and/or cost by using thinner types of sheet metal.

Several methods and devices have been suggested for improving the strength of joints having relatively thin joint members (e.g., sheet metal joints). These methods and devices include, for example, fasteners with improved thread forms, fasteners with improved head profiles, swaging operations for forming the holes in the joint members and welding components to the joint members. While these methods have generally achieved some success in improving the strength of joints with relatively thin joint members, they generally have disadvantages which render their use undesirable in certain situations. These drawbacks include, for example, the creation of fine chips during the tapping of the screw into the joint member or increased cost resulting from one or more additional process steps.

It is one object of the present invention to provide a method for installing a threaded fastener to a joint having thin joint member which produces a strong connection therebetween.

It is another object of the present invention to provide a method for installing a threaded fastener to a joint wherein a joint member is cooled after the fastener is installed to cause the joint material to contract about the fastener.

It is a further object of the present invention to provide a method for installing a threaded fastener to a joint which does not require the use of pilot holes in each of the joint members.

It is yet another object of the present invention to provide a tool for installing a threaded fastener to a joint having thin joint members which produces a strong connection between the fastener and the joint members.

A method for installing threaded fasteners to a workpiece having a joint formed by a plurality of joint members is provided. The method includes the steps of heating the joint in an area to be fastened, pushing the fastener into the joint to form a hole in at least one of the joint members, and rotating the fastener in the hole to form threads in the joint and to threadably engage the fastener to the workpiece. A tool for performing the method is also provided.

Additional advantages and features of the present invention will become apparent from the subsequent description and the appended claims, taken in conjunction with the accompanying drawings, wherein:
Figure 1 is a partial side view of a portion of a tool constructed in accordance with the teachings of the present invention in operative association with a fastener and a first illustrative joint;
Figure 2 is a view of a portion of the joint of Figure 1 at an intermediate point in the fastening process of the present invention;
Figure 3 is a cross-sectional view of a portion of the joint of Figure 1 after the fastening process of the present invention has been completed;
Figure 4 is a view of the tool of Figure 1 in operative association with a fastener and a second illustrative joint;
Figure 5 is a cross-sectional view of a portion of the joint of Figure 4 after the fastening process of the present invention has been completed;
Figure 6 is a partial side view of a tool constructed in accordance with the teachings of a second embodiment of the present invention; and
Figure 7 is a side elevational view of a tool constructed in accordance with he teachings of a third embodiment of the present invention.

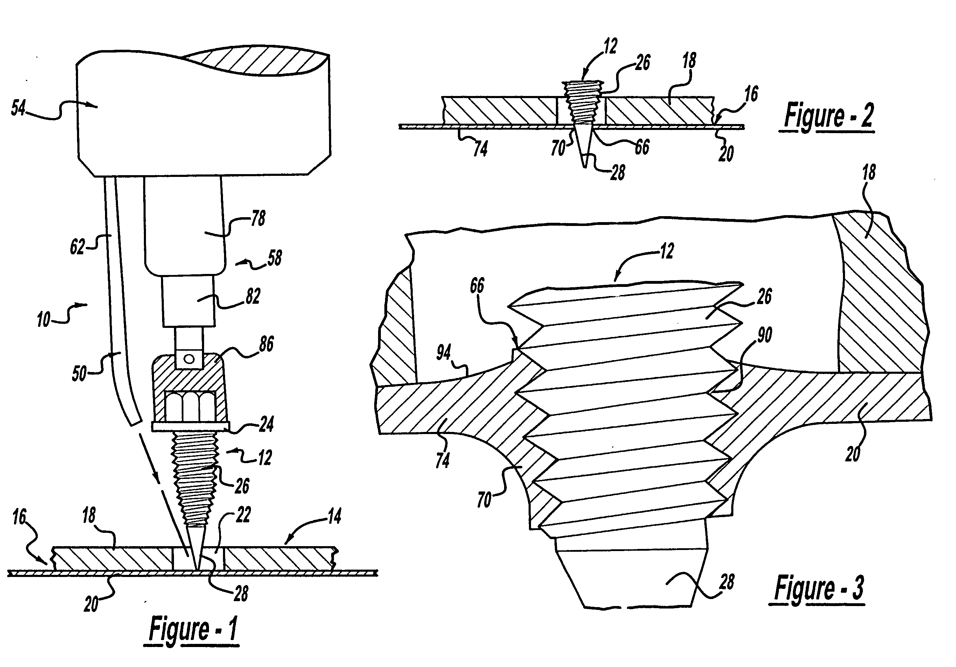

With reference to Figure 1 of the drawings, a tool for installing fasteners in accordance with the teachings of the present invention is generally indicated by reference numeral 10. Tool 10 is shown in operative association with a fastener 12 and a workpiece 14. In the particular example illustrated, workpiece 14 includes a joint 16 which is comprised of a first joint member 18 and a second joint member 20. A pilot hole 22 has been formed into first joint member 18. Second joint member 20 is preferably formed from a metal or plastic material which becomes ductile and pliable when heated. Fastener 12 is shown to include a conventional headed portion 24, a threaded portion 26 and an unthreaded tip portion 28. The end of threaded portion 26 nearest tip portion 28 tapers inwardly toward the longitudinal axis of fastener 12. Tip portion 28 is preferably conical in shape to assist in locating fastener 12 to pilot hole 22 and to promote the piercing of a second joint member 20. Those skilled in the art will understand that tip portion 28 may be configured differently and as such, the teachings of the present invention are not limited to fasteners having a conical tip portion.

Tool 10 is illustrated to be a fixtured tool that is coupled to a machine tool (not shown). In the embodiment illustrated, tool 10 includes heating means 50, pressing means 54 and rotating means 58. Heating means 50 is operable for directing a source of heat to an area of joint 16 which is to be fastened. The area to be heated preferably coincides with the area proximate the tip portion 28 of fastener 12. Heating means 50 is operable for heating second joint member 20 to a point where it becomes ductile and pliable. Heating means 50 is illustrated to be a laser 62 but may be any suitable heat source including an induction heater, an electric arc heater, a quartz heater, a resistance heater, a torch (e.g., butane, propane, oxy-acetylene) or a device that expels heated gases which are then directed toward the surface of second joint member 20. Heating means 50 preferably applies heat directly to joint 16 (i.e., second joint member 20) but may also apply heat to tip portion 28. This latter approach may be advantageous when the thickness of second joint member 20 is relatively thin or has a melting point which is substantially below the temperature of the heat which heating means 50 is capable of generating.

Upon sufficient heating of second joint member 20 by heating means 50, pressing means next applies a load to fastener 12 which is directed through the longitudinal axis of fastener 12. Sufficient load is applied by pressing means 54 to cause fastener 12 to form a hole 66 in second joint member 20 as shown in Figure 2. Tip portion 28 causes material 70 to extrude from the bottom surface 74 of second joint member 20.

Rotating means 58 is next employed to rotate fastener 12 in hole 66. Returning to Figure 1, rotating means 58 is shown to include a conventional electric or pneumatic motor 78, a spindle 82 and a conventional socket 86 which engages the headed portion 24 of fastener 12. As shown in Figure 3, the threads of threaded portion 26 engage the ductile and pliable portion of second joint member 20 and cause the formation of threads 90 along the inner surface of hole 66. As threaded portion 26 is tapered, continued rotation of fastener 12 causes hole 66 to enlarge, forcing material outward of the upper surface 94 and the lower surface 74 of second joint member 20. Rotating means 58 rotates fastener 12 until headed portion 24 contacts workpiece 14 and exerts a clamping force onto first and second joint members 18 and 20.

Forming of the threads 90 and tightening fastener 12 according to this method has several advantages. One advantage relates to the material extruded from second joint member 20 during the formation and subsequent threading of hole 66. This material increases the effective thickness of second joint member 20 and permits a greater number of threads 90 to be formed therein. Another advantage relates to the manner in which the threads 90 are formed. Threads 90 formed according to the method of the present invention are essentially rolled and have a higher strength as compared to threads which are cut. Additionally, the forming of threads 90 in this manner does not produce chips. A further advantage results from the subsequent cooling of second joint member 20 which causes the inner surface of hole 66 to contract against fastener 12. Contraction of the hole 66 against the fastener 12 improves the vibration resistance of the joint 16 and eliminates the need for thread-locking compounds.

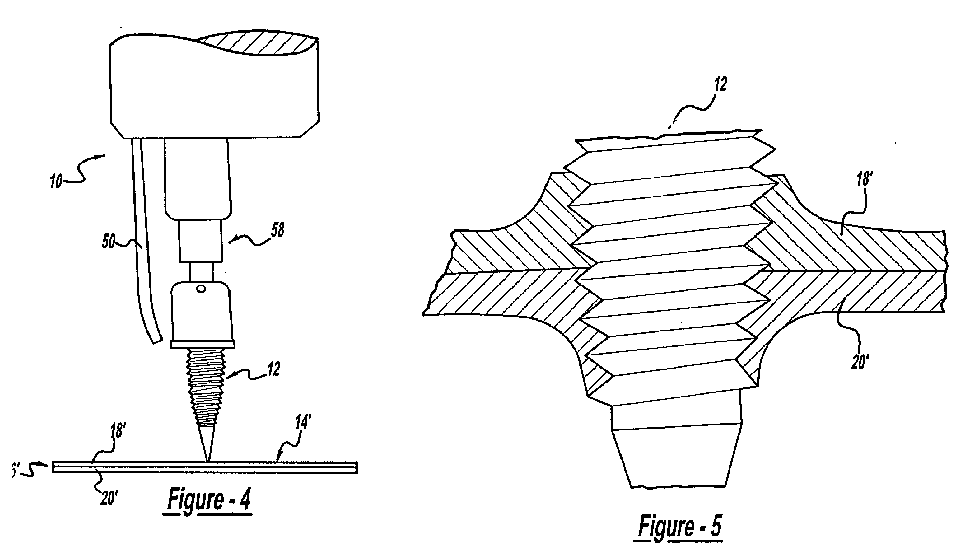

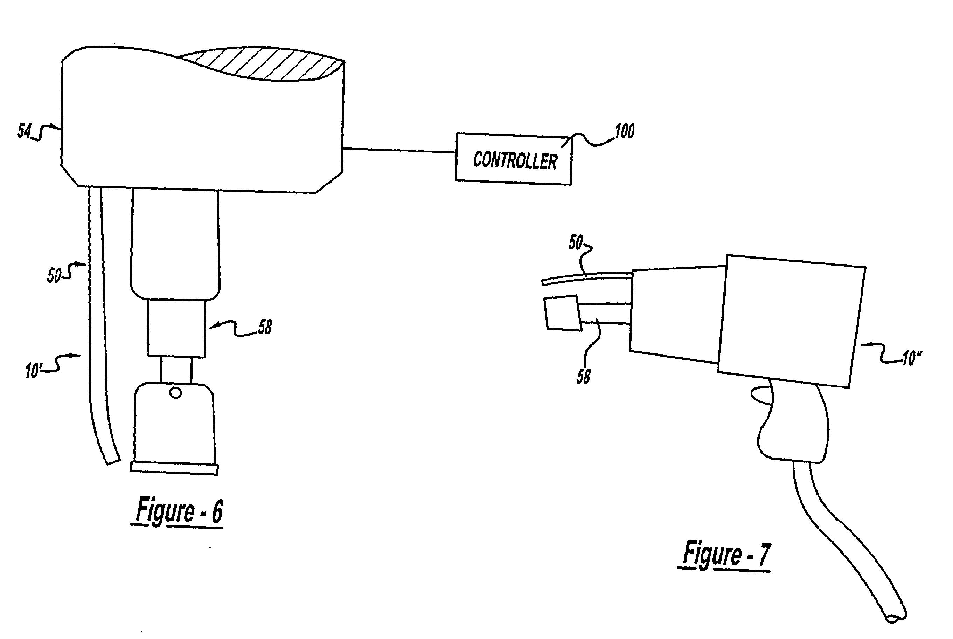

In Figure 4 tool 10 is shown in operative association with a workpiece 14' having a joint 16'. Joint 16' is substantially similar to joint 16 except that the first joint member 18' does not include a pilot hole. Installation of fastener 12 is substantially similar to the method described above except that both first and second joint members 18' and 20' are heated, fastener 12 is pushed through first and second joint members 18' and 20' and fastener 12 is rotated to form threads in first and second joint members 18' and 20' (Figure 5).

While the tool of the present invention has been described thus far in the context of a particular embodiment, those skilled in the art will appreciate that the invention, in its broader aspects, may be constructed somewhat differently. For example, the tool may be constructed as shown in Figure 6.

In Figure 6 a tool constructed in accordance with a second embodiment of the present invention is generally indicated by reference numeral 10'. Tool 10' includes a controller 100 but is otherwise substantially similar to tool 10. Controller 100 is coupled to heating means 50, pressing means 54 and rotating means 58 and is operable for controlling their actuation. Controller 100 may include various sensors, such as a temperature sensor or a load sensor for determining when to terminate the heating and pressing cycles, respectively. Alternatively, controller 100 may include a timer which controls the duration of the heating and/or pressing cycles.

In Figure 7, a tool constructed in accordance with a third embodiment of the present invention is generally indicated by reference numeral 10". Tool 10" is configured for use as a hand tool and does not include a pressing means. Tool 10" is otherwise substantially similar to tool 10. In performing the method of the present invention, force is applied to fastener 12 by the technician that is employing tool 10".

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the description of the appended claims.

## Claims

1. A method for installing a threaded fastener comprising the steps of:
providing a workpiece having a joint formed by a plurality of joint members;
heating the joint in an area to be fastened;
pushing the threaded fastener into the joint to form a hole in at least one of the joint members; and
rotating the threaded fastener in the hole to form threads in the joint and to threadably engage the threaded fastener to the workpiece.

2. The method of Claim 1, wherein during the step of heating the joint at least one of the joint members is heated to a ductile and pliable state.

3. The method of Claim 1, wherein the step of heating the joint is performed by a device from a group of devices consisting of induction heaters, lasers, resistance heaters, quartz heaters, electrical arc heaters and torches.

4. The method of Claim 1, wherein the step of heating the joint is performed by directing a flow of heated gas onto a surface of the joint.

5. The method of Claim 1, wherein the step of pushing the threaded fastener into the joint causes a hole to form in each of the joint members.

6. The method of Claim 1, wherein the threaded fastener includes an unthreaded tip portion.

7. The method of Claim 6, wherein the unthreaded tip portion is generally conically shaped.

8. The method of Claim 6, wherein heat is applied to the workpiece in the area proximate the tip portion during the step of heating the joint.

9. The method of Claim 1, further comprising the step of cooling the joint to cause the threads in the joint to contract around the threaded fastener.

10. The method of Claim 1, wherein heat is applied to the joint before the threaded fastener is brought into contact with any of the joint members.

11. The method of Claim 1, wherein heat is applied to the joint after the threaded fastener is brought into contact with at least one of the joint members.

12. The method of Claim 1, wherein the at least one of the joint members that has been heated is formed from a material from a group consisting of metal and plastic.

13. A thread forming apparatus for forming threads into a joint formed by a plurality of joint members, the thread forming apparatus including a fastener, a heater and spindle means, the fastener having a threaded portion and an unthreaded portion, the unthreaded portion contacting at least one of the plurality of joint members, the heater operable for heating the at least one of the joint members prior to installing the fastener, the spindle means pushing the fastener into the joint to form a hole in the at least one of the joint members which has been heated and rotating the fastener in the hole to form threads in the joint and threadably engage the threaded fastener to the joint.

14. The thread forming apparatus of Claim 13, wherein the heater is selected from a group consisting of induction heaters, lasers, resistance heaters, quartz heaters, electrical arc heaters and torches.

15. The thread forming apparatus of Claim 13, wherein the heater directs a flow of heated gas onto a surface of the joint.

16. The thread forming apparatus of Claim 13, wherein the heater applies heat to an area proximate the unthreaded tip portion of the fastener.

17. The thread forming apparatus of Claim 6, wherein the unthreaded tip portion is generally conically shaped.

18. A tool for installing a threaded fastener to a joint having a plurality of joint members, the tool comprising:
heating means for heating the joint in an area to be fastened; and
rotating means for rotating the fastener to form threads in at least one of the joint members and to threadably engage the threaded fastener to the joint.

19. The tool of Claim 18, further comprising pushing means for moving the fastener axially into at least one of the joint members, the pushing means causing the fastener to form a hole in the at least one of the joint members.

20. The tool of Claim 19, further comprising a controller operable for controlling the heating means to cause the heated area to become ductile and pliable.

21. The tool of Claim 20, wherein the controller is further operable for controlling the rotating means, the controller actuating the rotating means after the heating means has caused the heated area to become ductile and pliable.
